# EUROPÄISCHE PATENTSCHRIFT

(11) **EP 3 152 377 B1**
(45) Veröffentlichungstag und Bekanntmachung des Hinweises auf die Patenterteilung: **26.09.2018**
(21) Anmeldenummer: 15724990.5
(22) Anmeldetag: 21.05.2015
(51) Int. Cl.: E05B 81/16, E05B 85/10, E05B 81/12

(54) **SCHLOSSSYSTEM FÜR EIN KRAFTFAHRZEUG**
LOCK SYSTEM FOR A MOTOR VEHICLE
SYSTÈME DE SERRURE POUR VÉHICULE AUTOMOBILE

(30) Priorität: 05.06.2014 DE 102014107986
(43) Veröffentlichungstag der Anmeldung: 12.04.2017
(73) Patentinhaber: Huf Hülsbeck & Fürst GmbH & Co. KG, 42551 Velbert (DE)
(72) Erfinder: MÜLLER, Dirk, 45359 Essen (DE); SCHINDLER, Mirko, 42549 Velbert (DE); DIEKER, Coen, 7091 VW Dinxperlo (NL); TORKOWSKI, Thorsten, 44627 Herne (DE); ROSENBAUM, Marco, 40668 Meerbusch (DE)
(74) Vertreter: Zenz Patentanwälte Partnerschaft mbB
(86) Internationale Anmeldenummer: PCT/EP2015/061222
(87) Internationale Veröffentlichungsnummer: WO 2015/185364

(56) Entgegenhaltungen:
- EP-A1- 0 860 565
- EP-A1- 1 096 085
- EP-A2- 2 730 730
- WO-A2-2012/021782

## Beschreibung

Die Erfindung richtet sich auf ein Schlosssystem für ein Kraftfahrzeug, das eine Handhabe zum Öffnen einer Tür oder Klappe des Kraftfahrzeugs, eine mit der Handhabe gekoppelte Antriebseinrichtung, eine mit der Antriebseinrichtung gekoppelte Steuereinrichtung, welche zur Prüfung eines Zugangskodes eines mobilen ID-Gebers geeignet ist, und eine Schlosseinrichtung für die Tür oder Klappe aufweist, wobei die Handhabe zwischen einer Nichtgebrauchsstellung, in welcher sie bündig mit der Außenkontur der Tür oder Klappe verläuft, und einer Öffnungsstellung, in welcher sie zumindest Abschnittweise aus der Außenkontur hervorsteht, bewegbar ausgebildet ist, und wobei die Antriebseinrichtung zum Öffnen oder Schließen der Tür oder Klappe derart gekoppelt und ausgebildet ist, dass sie sich beim Öffnen oder Schließen entlang einer Bewegungsbahn, entlang welcher die Antriebseinrichtung sowohl die Handhabe in deren Öffnungsstellung ausfährt oder in deren Nichtgebrauchsstellung einfährt als auch die Schlosseinrichtung betätigt, bewegt.

Ein Schlosssystem der eingangs genannten Art ist zum Beispiel aus der EP 0 860 565 A1 bekannt.

Ferner sind aus dem Stand der Technik Schlosssysteme bekannt, die eine Griffanordnung mit einer Handhabe aufweisen. Bei diesen bekannten Schlosssystemen ist die Handhabe in ihrer Nichtgebrauchsstellung bündig in die Außenkontur einer Tür eingelassen. Über ein Signal, welches beispielsweise durch Betätigung eines Druckknopfes ausgelöst wird, kann die Handhabe aus ihrer versenkten Position herausbewegt werden. Unter der Versenkbarkeit der Handhabe leidet jedoch bei diesen bekannten Schlosssystemen die Ergonomie der Handhabe, so dass diese schwer zu betätigen und schlecht zu handhaben sein kann, was den Komfort des gesamten Schlosssystems reduziert.

Des Weiteren sind aus dem Stand der Technik Schlosssysteme bekannt, bei denen eine Zuzieheinrichtung für eine Kraftbetätigung einer Schlosseinrichtung vorgesehen ist, um Benutzer des Kraftfahrzeuges beim Schließen einer Tür oder Klappe gegen die Kraft eines Dichtungsprofils zu unterstützen. Üblicherweise überführt die Zuzieheinrichtung die Tür oder Klappe aus ihrer Vorraststellung in die Hauptraststellung und arbeitet gegen die Kraft der Türdichtung. Daneben kennt man auch Öffnungseinrichtungen, die bei einem Öffnungsvorgang die zugehörige Tür oder Klappe motorisch öffnen bzw. ausstellen, so dass ein Benutzer die Tür oder Klappe unschwer öffnen kann, ohne beispielsweise einen Außentürgriff ziehend zu beaufschlagen.

Solche bekannten Zuzieh-/Öffnungseinrichtungen müssen die großen Dichtungsgegenkräfte von Tür- oder Klappendichtungen berücksichtigen, wobei beim Schließen der Tür oder Klappe diese großen Dichtungsgegenkräfte überwunden werden müssen. Beim Öffnen der Tür oder Klappe muss diesen Kräften entgegengewirkt werden, um eine unerwünschte Geräuschentwicklung bei plötzlicher Entlastung der Gummidichtung zu vermeiden und die Tür oder Klappe aus der Hauptraststellung mit einer gewissen Verzögerung in die Vorraststellung zu bringen. Es ist ersichtlich, dass solche Zuzieh-/Öffnungseinrichtungen insgesamt die Kosten eines Schlosssystems in die Höhe treibt.

Der Erfindung liegt die Aufgabe zugrunde eine Lösung zu schaffen, die auf konstruktiv einfache Weise ein Schlosssystem bereitstellt, das kostengünstig in seiner Herstellung ist und den Bedienkomfort erhöht.

Diese Aufgabe wird erfindungsgemäß gelöst durch ein Schlosssystem für ein Kraftfahrzeug gemäß dem Patentanspruch 1.

Das erfindungsgemäße Schlosssystem für ein Kraftfahrzeug weist eine Handhabe zum Öffnen einer Tür oder Klappe des Kraftfahrzeugs, eine mit der Handhabe gekoppelte Antriebseinrichtung, eine mit der Antriebseinrichtung gekoppelte Steuereinrichtung, welche zur Prüfung eines Zugangskodes eines mobilen ID-Gebers geeignet ist, und eine Schlosseinrichtung für die Tür oder Klappe auf, wobei die Handhabe zwischen einer Nichtgebrauchsstellung, in welcher sie bündig mit der Außenkontur der Tür oder Klappe verläuft, und einer Öffnungsstellung, in welcher sie zumindest Abschnittweise aus der Außenkontur hervorsteht, bewegbar ausgebildet ist, wobei die Antriebseinrichtung zum Öffnen oder Schließen der Tür oder Klappe derart gekoppelt und ausgebildet ist, dass sie sich beim Öffnen oder Schließen entlang einer Bewegungsbahn, entlang welcher die Antriebseinrichtung sowohl die Handhabe in deren Öffnungsstellung ausfährt oder in deren Nichtgebrauchsstellung einfährt als auch die Schlosseinrichtung betätigt, bewegt, wobei die Antriebseinrichtung sich beim Bewegen entlang der Bewegungsbahn aus einer Grundposition über eine erste Betriebsposition in eine zweite Betriebsposition bewegt, und wobei die Antriebseinrichtung zwischen der Grundposition und der ersten Betriebsposition die Handhabe aus der Nichtgebrauchsstellung in die Öffnungsstellung oder aus der Öffnungsstellung in die Nichtgebrauchsstellung bewegend und zwischen der ersten Betriebsposition und der zweiten Betriebsposition die Schlosseinrichtung betätigend ausgebildet ist, und
wobei die Handhabe und die Antriebseinrichtung derart gekoppelt sind, dass eine Betätigung der Handhabe in der Öffnungsstellung die Antriebseinrichtung derart aktiviert, dass sich die Antriebseinrichtung aus der ersten Betriebsposition in die zweite Betriebsposition bewegt und dass die Antriebseinrichtung bei ihrer Bewegung in die zweite Betriebsposition die Schlosseinrichtung auslöst.

Vorteilhafte und zweckmäßige Ausgestaltungen und Weiterbildungen der Erfindung ergeben sich aus den Unteransprüchen.

Durch die Erfindung wird ein Schlosssystem für ein Kraftfahrzeug zur Verfügung gestellt, das sich durch eine funktionsgerechte und effiziente Kopplung von Bauteilen auszeichnet und einen einfachen und kostengünstigen Aufbau aufweist. Gemäß der Erfindung steuert die Steuereinrichtung dann, wenn ihre Prüfung ergibt, dass es sich um einen Zugangskode eines legitimierten ID-Gebers handelt, ein Signal an die Steuereinrichtung, mit welcher die Aktivierungseinrichtung gekoppelt ist. Dabei kann eine Sensoreinrichtung für eine Passive Entry-System vorgesehen sein, welche einen sich annähernden ID-Geber aufweckt, so dass dieser seinen Zugangskode an die Steuereinrichtung des Schlosssystems sendet, wo er hinsichtlich seiner Legitimation überprüft wird. Alternativ zu einer Sensoreinrichtung kann auch eine Empfangseinrichtung vorgesehen sein, die einen Zugangskode eines mobilen ID-Gebers empfängt, wobei hier ein Benutzer den ID-Geber betätigen muss, damit dieser den Zugangskode aussendet. Die Empfangseinrichtung leitet dann den empfangenen Zugangskode an die Steuereinrichtung weiter, wo der Zugangskode hinsichtlich seiner Legitimation überprüft wird. Unabhängig davon, ob eine Sensoreinrichtung oder eine Empfangseinrichtung vorgesehen sind, veranlasst ein legitimierter Zugangskode bzw. legitimierter ID-Geber die Steuereinrichtung dazu, die Antriebseinrichtung anzusteuern, so dass diese sich in Bewegung setzt. Dadurch bewegt die nun in Bewegung gesetzte Antriebseinrichtung, die sich entlang ihrer Bewegungsbahn bewegt, die Handhabe aus der Nichtgebrauchsstellung in die Öffnungsstellung, in welcher die Tür oder Klappe aus der Außenkontur hervorsteht, damit zum Beispiel ein Benutzer die Handhabe zur Betätigung hintergreifen kann. Die Kopplung zwischen Steuereinrichtung und Antriebseinrichtung dient folglich dazu, aufgrund eines erkannten, legitimierten Benutzers die Antriebseinrichtung in Bewegung zu setzten, so dass diese die Handhabe ausfährt, damit der legitimierte Benutzer sie handhaben bzw. einen an der Handhabe angebrachten Taster betätigen kann. Durch die Handhabung bzw. Betätigung erhält die Antriebseinrichtung ein Rücksignal, woraufhin sie sich weiter entlang ihrer Bewegungsbahn bewegt, was dazu führt, dass die Antriebseinrichtung die Schlosseinrichtung betätigt. Folglich ist zum Öffnen der Tür oder Klappe keine manuelle Kraft des Benutzers mehr erforderlich, weil die Antriebseinrichtung das Öffnen der Schlosseinrichtung nach Art eines elektronischen Schlosses übernimmt. Beim Schließen hingegen fungiert die Antriebseinrichtung als Zuziehhilfe, so dass in vorteilhafterweise die Kraft infolge der Komprimierung der Tür- oder Klappendichtung überwunden werden kann, ohne dass ein Benutzer diese Kraft aufwenden müsste. Bei dem erfindungsgemäßen Schlosssystem übernimmt folglich eine einzige Antriebseinrichtung die Funktionen des Ein- und Ausfahrens der Handhabe und auch das Öffnen und Zuziehen der Schlosseinrichtung, wozu im Stand der Technik zwei separate und voneinander getrennt arbeitende Antriebe notwendig sind. Ein weiterer Vorteil der Erfindung liegt somit in der wenig Bauraum beanspruchenden Ausgestaltung des Schlosssystems. Entlang der einen einzigen Bewegungsbahn bewirkt die Antriebseinrichtung sowohl das Ein- und Ausfahren der Handhabe als auch die Betätigung der Schlosseinrichtung, was sich vorteilhaft auf den Bauraum auswirkt.

Die Erfindung sieht vor, dass die Antriebseinrichtung sich beim Bewegen entlang der Bewegungsbahn aus einer Grundposition über eine erste Betriebsposition in eine zweite Betriebsposition bewegt, und wobei die Antriebseinrichtung zwischen der Grundposition und der ersten Betriebsposition die Handhabe aus der Nichtgebrauchsstellung in die Öffnungsstellung oder aus der Öffnungsstellung in die Nichtgebrauchsstellung bewegend und zwischen der ersten Betriebsposition und der zweiten Betriebsposition die Schlosseinrichtung betätigend ausgebildet ist. Die Bewegungsbahn der Antriebseinrichtung ist folglich derart ausgestaltet, dass in logischer Reihenfolge die Vorgänge beim Öffnen, sprich Handhabe ausfahren und anschließend Schlosseinrichtung entsprechend betätigen, und beim Schließen, sprich Handhabe einfahren und anschließend Schlosseinrichtung zuziehen, von der Antriebseinrichtung bewirkt werden.

Mit anderen Worten ist es in Ausgestaltung der Erfindung von Vorteil, wenn sich die Antriebseinrichtung entlang der Bewegungsbahn aus einer Grundposition über eine erste Betriebsposition in eine zweite Betriebsposition bewegt, und wobei in der Grundposition die Handhabe in der Nichtgebrauchsstellung angeordnet ist, in der ersten Betriebsposition die Antriebseinrichtung die Handhabe in der Öffnungsstellung hält und in der zweiten Betriebsposition die Antriebseinrichtung die Handhabe in der Öffnungsstellung hält sowie die Schlosseinrichtung betätigt. Die Antriebseinrichtung bewirkt folglich in der zweiten Betriebsposition zwei Funktionen, denn sie hält die Handhabe in der Öffnungsstellung und bewirkt und/oder aktiviert gleichzeitig das Öffnen der Schlosseinrichtung.

Für einen besonders effizienten Austausch von Informationen sieht die Erfindung in Ausgestaltung vor, dass eine Sensoreinrichtung vorgesehen ist, die einen mobilen ID-Geber aktivierend ausgebildet ist, wobei die Aktivierung des ID-Gebers ein Versenden eines Zugangskodes von dem ID-Geber an die Steuereinrichtung bewirkt und die Steuereinrichtung und die Antriebseinrichtung derart gekoppelt sind, dass die Steuereinrichtung bei Ermittlung eines legitimierten ID-Gebers die Antriebseinrichtung zu deren Bewegung aus der Grundposition in die erste Betriebsposition ansteuert.

Weiterhin ist es in Ausgestaltung der Erfindung von Vorteil, wenn die Sensoreinrichtung als kapazitiver Sensor ausgebildet ist. Alternativ zu einem kapazitiven Sensor kann auch ein induktiver Sensor verwendet werden. Beide Sensortypen sind im Markt verfügbar und mit entsprechenden Schaltvorschriften versehen.

Alternativ für einen besonders effizienten Austausch von Informationen sieht die Erfindung in Ausgestaltung vor, dass eine mit der Steuereinrichtung gekoppelte Empfangseinrichtung vorgesehen ist, die einen von einem mobilen ID-Geber versendeten Zugangskode empfängt und an die Steuereinrichtung zu einer Legitimationsprüfung weiterleitet, wobei die Steuereinrichtung und die Antriebseinrichtung derart gekoppelt sind, dass die Steuereinrichtung bei Ermittlung eines legitimierten ID-Gebers die Antriebseinrichtung zu deren Bewegung aus der Grundposition in die erste Betriebsposition ansteuert. Dabei kann die Empfangseinrichtung teil der Steuereinrichtung selbst sein, muss es aber nicht.

Ein besonders kompaktes Schlosssystem lässt sich in Ausgestaltung der Erfindung dadurch realisieren, dass die Sensoreinrichtung oder die Empfangseinrichtung in der Handhabe untergebracht und angeordnet ist. Beispielsweise können bei Ausgestaltung als Sensoreinrichtung kapazitive Sensoren hierbei durch Metallflächen im Inneren der Handhabe gebildet werden, die mit einer geeigneten Ladeelektronik gekoppelt sind. Auf diese lässt sich eine sehr kompakte Handhabe realisieren. Aber auch eine Ausgestaltung als Empfangseinrichtung kann in vorteilhafterweise platzsparend innerhalb der Handhabe angeordnet und untergebracht sein.

Hinsichtlich eines kompakten und einen geringen Bauraum einnehmenden Schlosssystems ist es von Vorteil, wenn die Antriebseinrichtung als ein Stellantrieb in Form eines Zahnradgetriebes oder als ein Stellantrieb in Form einer mit einem Zahnrad zusammenwirkenden Zahnstange ausgebildet ist. Beide Ausgestaltungen erlauben ein sequenzielles Abarbeiten und Abfahren der verschiedenen Stellungen und Positionen.

Den geringsten Bauraum beansprucht jedoch eine erfindungsgemäße Ausgestaltung, bei der die Antriebseinrichtung als ein Stellantrieb in Form einer Exzenterscheibe ausgebildet ist, die bei Bewegung aus der Grundposition in die erste Betriebsposition einen mit der Handhabe in Wirkverbindung stehenden Hebel auslenkt, dessen Auslenkung eine Bewegung der Handhabe in die Öffnungsstellung bewirkt.

Schließlich ist in Ausgestaltung der Erfindung vorgesehen, dass die Antriebseinrichtung einen motorischen Antrieb umfasst. Insbesondere ein elektromotorischer Antrieb kommt hier in Frage, der einen hohen Wirkungsgrad, geringe Abmessungen und eine geringe Masse aufweist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine Seitenansicht auf ein Kraftfahrzeug mit erfindungsgemäßen Schlosssystemen,
Figur 2 ein exemplarisches Funktionsdiagramm des Schlosssystems nach Art eines Schaltplans und
Figur 3 ein exemplarisches Ausführungsbeispiel des erfindungsgemäßen Schlosssystems in schematischer Darstellung.

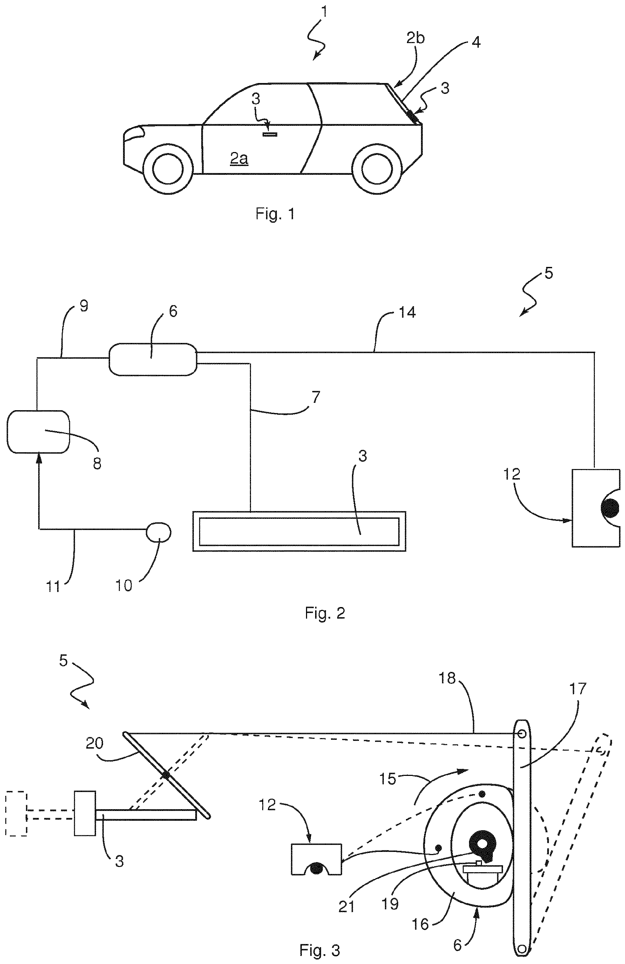

In Figur 1 ist ein Kraftfahrzeug 1 in Form eines PKWs exemplarisch dargestellt, welches in dem Beispiel über eine Tür 2a sowie eine Klappe bzw. Heckklappe 2b verfügt, die über eine jeweilige Handhabe 3 geöffnet werden können. Eine jeweilige Handhabe 3 ist zwischen einer Nichtgebrauchsstellung und einer Öffnungsstellung bewegbar ausgebildet, wobei die Handhabe 3 in der Nichtgebrauchsstellung bündig mit der Außenkontur 4 der Tür 2a oder Klappe 2b verläuft und in ihrer Öffnungsstellung zumindest Abschnittweise aus der Außenkontur 4 hervorsteht, um beispielsweise von der Hand eines Benutzers hintergriffen werden zu können.

In Figur 2 ist in schematischer Weise ein Funktionsdiagramm eines erfindungsgemäßen Schlosssystems 5 für das Kraftfahrzeug 1 gezeigt. Das Schlosssystem 5 ist in der Tür 2a oder Klappe 2b des Kraftfahrzeugs 1 integriert und umfasst die Handhabe 3 zum Öffnen der Tür 2a oder Klappe 2b des Kraftfahrzeugs 1, eine mit der Handhabe 3 gekoppelte Antriebseinrichtung 6 über eine erste Kopplung 7, eine mit der Antriebseinrichtung 6 gekoppelte Steuereinrichtung 8 über eine zweite Kopplung 9, eine mit der Steuereinrichtung 8 gekoppelte Empfangseinrichtung 10 über eine dritte Kopplung 11 und eine Schlosseinrichtung 12 für die Tür 2a oder Klappe 2b. Die Empfangseinrichtung 10 ist in Figur 2 lediglich exemplarisch dargestellt und kann alternativ auch als eine Sensoreinrichtung ausgebildet sein, bei der die dritte Kopplung 11 dann allerdings entfällt. Die Empfangseinrichtung 10 empfängt einen Zugangskode, der infolge einer durch einen Benutzer ausgelösten (aktiven) Betätigung eines Schlüssels oder ID-Gebers von diesem ausgesendet wird, und leitet den empfangenen Zugangskode an die Steuereinrichtung 8 weiter, welche die Legitimation des empfangenen Zugangskodes prüft. Alternativ zu der Empfangseinrichtung 10 kann auch eine Sensoreinrichtung vorgesehen sein, die einen sich annähernden ID-Geber derart aufweckt, dass dieser seinen Zugangskode aussendet, der dann wiederum von der Steuerungseinrichtung empfangen und hinsichtlich seiner Legitimation ausgewertet bzw. überprüft wird. In Figur 2 ist die Schlosseinrichtung 12 über eine vierte Kopplung 14 mit der Antriebseinrichtung 6 gekoppelt, wobei die Schlosseinrichtung 12 als Drehfallenschloss ausgebildet sein kann.

Bei dem erfindungsgemäßen Schlosssystem 5 wird zunächst die Legitimation eines Zugangskodes eines ID-Gebers auf bekannte Weise mit Hilfe der Empfangseinrichtung 10 überprüft. Wie vorstehend angeführt, muss bei dieser Ausgestaltung des erfindungsgemäßen Schlosssystems 5 ein Benutzer aktiv den Schlüssel oder ID-Geber betätigen, wodurch der Schlüssel oder ID-Geber seinen Zugangskode aussendet, der von der Empfangseinrichtung 10 empfangen und über die dritte Kopplung 11 an die Steuereinrichtung 8 weitergeleitet wird, wo letztlich die Überprüfung stattfindet, ob der empfangene Zugangskode zu dem Schlosssystem 1 gehört oder nicht. Wenn die Steuereinrichtung 8 erkennt, dass es sich um einen legitimierten ID-Geber handelt, wird die Antriebseinrichtung 6 von der Steuereinrichtung 8 über die zweite Kopplung 9 in Bewegung gesetzt, so dass sich die Antriebseinrichtung 6 entlang ihrer Bewegungsbahn aus ihrer Grundposition in eine erste Betriebsposition bewegt. Durch diese Bewegung der Antriebseinrichtung 6, die mit der Handhabe 3 mechanisch oder elektronisch gekoppelt ist, wird die Handhabe 3 aus der Nichtgebrauchsstellung in ihre Öffnungsstellung überführt, in welcher sie zumindest abschnittsweise aus der Außenkontur der Tür 2a oder Klappe 2b hervorsteht, um zum Beispiel zur Handhabung von einem Benutzer hintergriffen werden zu können. Eine zweite Sensoreinrichtung, die von dem Benutzer berührt werden muss, oder ein Taster, der von dem legitimierten Benutzer betätigt werden muss, können an der Handhabe 3 vorgesehen sein, um die Tür 2a oder Klappe 2b zu öffnen. Der Benutzer muss nicht mit manueller Kraft die Tür 2a oder Klappe 2b öffnen, sondern es reicht eine Annäherung an den zweiten Sensor oder eine Betätigung des Tasters. Wenn diese Annäherung oder Betätigung erfolgt ist, öffnet die Tür 2a oder Klappe 2b, indem die Antriebseinrichtung 6 aus der ersten Betriebsposition in ihre zweite Betriebsposition verfährt. Sollte die Tür 2a oder Klappe 2b nicht durch Annäherung oder Betätigung geöffnet werden, wird die Handhabe 3 automatisch nach zehn Sekunden eingefahren und es beginnt wieder ein Algorithmus zur Prüfung eines Zugangskodes eines mobilen ID-Gebers, wie es vorstehend beschrieben ist. Nach dem Öffnungsvorgang kann dann von einem weiteren Sensor erfasst werden, ob die Tür 2a oder Klappe 2b geöffnet und wieder geschlossen wird. Insbesondere kann ein solcher Sensor erfassen, ob die Tür 2a oder Klappe 2b wieder in ihrer Vorrastposition angekommen ist. Wenn dies der Fall ist, wird beispielsweise die Antriebseinrichtung 6 in ihre Grundposition zurückbewegt und in eine Richtung weiterbewegt, die der ersten Betriebsposition abgewandt ist. Bei dieser Bewegung kann die Antriebseinrichtung 6 die Tür 2a oder Klappe 2b zuziehen. Die Antriebseinrichtung 6 kann also je nach Richtung, in welche sie sich aus der Grundposition bewegt, entweder als Öffnungshilfe oder als Zuziehhilfe fungieren.

Anhand Figur 3, in welcher ein exemplarisches Ausführungsbeispiel des erfindungsgemäßen Schlosssystems 5 in schematischer Darstellung gezeigt ist, soll die Funktion des Schlosssystems 5 noch näher erläutert werden. Mit Hilfe der vorstehend genannten Kopplungen 7, 9, 11, 14 ist die Antriebseinrichtung 6 derart gekoppelt und ausgebildet, dass sie sich beim Öffnen oder Schließen der Tür 2a oder Klappe 2b entlang einer Bewegungsbahn (durch den Pfeil 15 in Figur 3 angedeutet) bewegt. Die Antriebseinrichtung 6 ist in Figur 3 als ein Stellantrieb in Form einer Exzenterscheibe 16 ausgebildet, die bei Bewegung aus der Grundposition in die erste Betriebsposition einen mit der Handhabe 3 in Wirkverbindung stehenden Hebel 17 auslenkt. Der Hebel 17 kann beispielsweise federbelastet sein, so dass er von einem Federelement in Richtung der Exzenterscheibe 16 an diese angedrückt wird und entsprechend der Drehung der Exzenterscheibe 16 ausgelenkt wird. Die Auslenkung des Hebels 17 bewirkt dann weiter eine Bewegung der Handhabe 3 in die Öffnungsstellung. Die Öffnungsstellung ist in Figur 3 anhand der gestrichelten Linien dargestellt, wohingegen die Nichtgebrauchsstellung anhand der durchgezogenen Linien dargestellt ist. Alternativ zu der Ausbildung als Exzenterscheibe 16 könnte die Antriebseinrichtung 6 auch als ein Stellantrieb in Form eines Zahnradgetriebes oder in Form einer mit einem Zahnrad zusammenwirkenden Zahnstange ausgebildet sein. In jedem Fall weist die Antriebseinrichtung 6 einen motorischen, insbesondere elektromotorischen, Antrieb auf, um den Stellantrieb entlang seiner Bewegungsbahn 15 zu bewegen und dabei die Handhabe ein- oder auszufahren und die Schlosseinrichtung 12 zu betätigen. Entlang der Bewegungsbahn 15, die in dem Ausführungsbeispiel eine elliptische Form aufgrund der Form der Exzenterscheibe 16 aufweist, fährt die Antriebseinrichtung 6 die Handhabe 3 in deren Öffnungsstellung aus oder in deren Nichtgebrauchsstellung ein und betätigt die Schlosseinrichtung 12, die in dem Ausführungsbeispiel als Drehfallenschloss ausgebildet ist. In dem vorliegenden Fall ist die Betätigung ein Öffnen der Schlosseinrichtung 12, was elektrisch bzw. elektronisch nach Art eines E-Latch, also eines Schlosses, bei dem alle Funktionen elektrisch angesteuert werden, erfolgt und keine manuelle Kraft des Benutzers erfordert. Von Bedeutung für die Erfindung ist es, dass die Antriebseinrichtung 6 sich beim Bewegen entlang der Bewegungsbahn 15 aus einer Grundposition über eine erste Betriebsposition in eine zweite Betriebsposition bewegt. Alle Positionen liegen auf der Bewegungsbahn 15 und werden nach Bedarf des Benutzers nach und nach angefahren. Gemäß dem vorstehend anhand von Figur 2 exemplarisch beschriebenen Verfahrensablauf ist im Hinblick auf das Schlosssystem 5 die Antriebseinrichtung 6 zwischen der Grundposition und der ersten Betriebsposition die Handhabe 3 aus der Nichtgebrauchsstellung in die Öffnungsstellung oder aus der Öffnungsstellung in die Nichtgebrauchsstellung bewegend und zwischen der ersten Betriebsposition und der zweiten Betriebsposition die Schlosseinrichtung 12 betätigend ausgebildet. Insbesondere liegt die Exzenterscheibe 16 in Grundposition an dem Hebel 17 an, der über ein Seilzugsystem 18 mit einem um eine Drehachse drehbaren Schwenkhebel 20 verbunden ist, der wiederum mit der Handhabe 3 gekoppelt ist. Bei einer Bewegung der Antriebseinrichtung 6 aus der Grundposition in die erste Betriebsposition dreht sich die Exzenterscheibe 16 in die Richtung des Pfeils 15 in Figur 3 und drängt aufgrund ihrer Exzentrität den Hebel 17 in die gestrichelte Position, wodurch das Seilzugssystem 18 den Schwenkhebel 20 dreht, so dass schließlich die Handhabe 3 ausgefahren wird. Um die Bewegung der Exzenterscheibe 16 zu stoppen, ist in dem dargestellten Ausführungsbeispiel ein Taster 19 vorgesehen, der von einem sich mit der Exzenterscheibe 16 mitdrehenden Nockenelement 21 bei der Bewegung aus der Grundposition in die erste Betriebsposition gedrückt wird, wodurch die Bestromung der Antriebseinrichtung 6 beendet wird, so dass die Antriebseinrichtung 6 gestoppt wird. Bei weiterer Bewegung der Exzenterscheibe 16 in die zweite Betriebsposition bleibt die Handhabe 3 ausgefahren, allerdings wird nun die Schlosseinrichtung 12 mit Hilfe der vierten Kopplung 14 von der Antriebseinrichtung 6 betätigt, insbesondere geöffnet. Allgemein ausgedrückt bewegt sich die Antriebseinrichtung 6 entlang der Bewegungsbahn 15 aus der Grundposition über die erste Betriebsposition in die zweite Betriebsposition zum Öffnen der Tür 2a oder Klappe 2b und ggf. wieder zurück in die erste Betriebsposition, um die Tür 2a oder Klappe 2b zu schließen (power cinching). In der Grundposition ist die Handhabe 3 in der Nichtgebrauchsstellung angeordnet, wohingegen die Antriebseinrichtung 6 in der ersten Betriebsposition die Handhabe 3 in der Öffnungsstellung hält. In der zweiten Betriebsposition ist die Handhabe 3 nach wie vor in der Öffnungsstellung angeordnet und die Antriebseinrichtung 6 betätigt die Schlosseinrichtung 12.

Damit sich die Antriebseinrichtung 6 aus der Grundposition heraus in Richtung der ersten Betriebsposition bewegt, sind bei Ermittlung eines legitimierten ID-Gebers die Steuereinrichtung 8 und die Antriebseinrichtung 6 derart über die zweite Kopplung 11 gekoppelt, dass die Steuereinrichtung 8 durch das empfangene Signal die Antriebseinrichtung 6 zu deren Bewegung aus der Grundposition in die erste Betriebsposition ansteuert bzw. bestromt. Die Kopplungen 7, 9, 11 und 14 können als elektrische Leitungsverbindungen ausgestaltet sein, um Signale zwischen den Bauteilen zu versenden oder um per Signal ein Bauteil in Betrieb zu setzen. Ferner sind die Handhabe 3 und die Antriebseinrichtung 6 derart über die erste Kopplung 7 miteinander gekoppelt, dass eine Betätigung der Handhabe 3 in der Öffnungsstellung die Antriebseinrichtung 6 derart aktiviert, dass sich die Antriebseinrichtung 6 aus der ersten Betriebsposition in die zweite Betriebsposition bewegt und dass die Antriebseinrichtung 6 bei ihrer Bewegung in die zweite Betriebsposition die Schlosseinrichtung 12 auslöst.

Durch die Erfindung wird folglich ein Schlosssystem mit einer Antriebseinrichtung 6 zur Verfügung gestellt, die nach Art eines Stellantriebes bzw. Aktuators ausgebildet ist, der in wenigstens drei Positionen (Grundposition, erste Betriebsposition, zweite Betriebsposition) verfahrbar ist. Insbesondere werden von der zweiten Betriebsposition zwei Aufgaben erfüllt, und zwar wird zum einen die in Nichtgebrauchsstellung flächenbündig mit der Tür oder Klappe ausgerichtete Handhabe in ihrer Öffnungsstellung gehalten und zum anderen wird zusätzlich die Schlosseinrichtung 12 betätigt. Dabei handelt sich um eine Schlosseinrichtung 12, bei der alle Funktionen elektrisch angesteuert werden. Die Antriebseinrichtung 6 des erfindungsgemäßen Schlosssystems 5 übernimmt also die Funktionen des Ein- und Ausfahrens der Handhabe 3 und der Schlossbetätigung (zum Beispiel das Öffnen oder auch das Zuziehen). Mit einem einzigen Stellantrieb ist es also möglich, sowohl die Handhabe 3 ein- und auszufahren als auch die Schlosseinrichtung 12 zu öffnen und zuzuziehen (Zuziehhilfe - power cinching).

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der durch die anliegenden Patentansprüche definierte Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt und im durch die anliegenden Patentansprüche definierte Bereich der Erfindung liegt.

## Patentansprüche

1. Schlosssystem (5) für ein Kraftfahrzeug (1), das eine Handhabe (3) zum Öffnen einer Tür (2a) oder Klappe (2b) des Kraftfahrzeugs (1), eine mit der Handhabe (3) gekoppelte Antriebseinrichtung (6), eine mit der Antriebseinrichtung (6) gekoppelte Steuereinrichtung (8), welche zur Prüfung eines Zugangskodes eines mobilen ID-Gebers geeignet ist, und eine Schlosseinrichtung (12) für die Tür (2a) oder Klappe (2b) aufweist,
wobei die Handhabe (3) zwischen einer Nichtgebrauchsstellung, in welcher sie bündig mit der Außenkontur (4) der Tür (2a) oder Klappe (2b) verläuft, und einer Öffnungsstellung, in welcher sie zumindest Abschnittweise aus der Außenkontur (4) hervorsteht, bewegbar ausgebildet ist,
wobei die Antriebseinrichtung (6) zum Öffnen oder Schließen der Tür (2a) oder Klappe (2b) derart gekoppelt und ausgebildet ist, dass sie sich beim Öffnen oder Schließen entlang einer Bewegungsbahn (15), entlang welcher die Antriebseinrichtung (6) sowohl die Handhabe (3) in deren Öffnungsstellung ausfährt oder in deren Nichtgebrauchsstellung einfährt als auch die Schlosseinrichtung (12) betätigt, bewegt
**dadurch gekennzeichnet, dass**
die Antriebseinrichtung (6) sich beim Bewegen entlang der Bewegungsbahn (15) aus einer Grundposition über eine erste Betriebsposition in eine zweite Betriebsposition bewegt, und wobei die Antriebseinrichtung (6) zwischen der Grundposition und der ersten Betriebsposition die Handhabe (3) aus der Nichtgebrauchsstellung in die Öffnungsstellung oder aus der Öffnungsstellung in die Nichtgebrauchsstellung bewegend und zwischen der ersten Betriebsposition und der zweiten Betriebsposition die Schlosseinrichtung (12) betätigend ausgebildet ist,
wobei die Handhabe (3) und die Antriebseinrichtung (6) derart gekoppelt sind, dass eine Betätigung der Handhabe (3) in der Öffnungsstellung die Antriebseinrichtung (6) derart aktiviert, dass sich die Antriebseinrichtung (6) aus der ersten Betriebsposition in die zweite Betriebsposition bewegt und dass die Antriebseinrichtung (6) bei ihrer Bewegung in die zweite Betriebsposition die Schlosseinrichtung (12) auslöst.

2. Schlosssystem (5) nach Anspruch 1, wobei sich die Antriebseinrichtung (6) entlang der Bewegungsbahn (15) aus einer Grundposition über eine erste Betriebsposition in eine zweite Betriebsposition bewegt, und wobei in der Grundposition die Handhabe (3) in der Nichtgebrauchsstellung angeordnet ist, in der ersten Betriebsposition die Antriebseinrichtung (6) die Handhabe (3) in der Öffnungsstellung hält und in der zweiten Betriebsposition die Antriebseinrichtung (6) die Handhabe (3) in der Öffnungsstellung hält sowie die Schlosseinrichtung (12) betätigt.

3. Schlosssystem (5) nach einem der vorhergehenden Ansprüche, wobei eine Sensoreinrichtung vorgesehen ist, die einen mobilen ID-Geber aktivierend ausgebildet ist, wobei die Aktivierung des ID-Gebers ein Versenden eines Zugangskodes von dem ID-Geber an die Steuereinrichtung (8) bewirkt und die Steuereinrichtung (8) und die Antriebseinrichtung (6) derart gekoppelt sind, dass die Steuereinrichtung (8) bei Ermittlung eines legitimierten ID-Gebers die Antriebseinrichtung (6) zu deren Bewegung aus der Grundposition in die erste Betriebsposition ansteuert.

4. Schlosssystem (5) nach Anspruch 3, wobei die Sensoreinrichtung als kapazitiver Sensor ausgebildet ist.

5. Schlosssystem (5) nach Anspruch 1, **dadurch gekennzeichnet, dass** eine mit der Steuereinrichtung (8) gekoppelte Empfangseinrichtung (10) vorgesehen ist, die einen von einem mobilen ID-Geber versendeten Zugangskode empfängt und an die Steuereinrichtung (8) zu einer Legitimationsprüfung weiterleitet, wobei die Steuereinrichtung (8) und die Antriebseinrichtung (6) derart gekoppelt sind, dass die Steuereinrichtung (8) bei Ermittlung eines legitimierten ID-Gebers die Antriebseinrichtung (6) zu deren Bewegung aus der Grundposition in die erste Betriebsposition ansteuert.

6. Schlosssystem (5) nach einem der Ansprüche 3 bis 5, wobei die Sensoreinrichtung (10) oder die Empfangseinrichtung in der Handhabe (3) untergebracht und angeordnet ist.

7. Schlosssystem (5) nach einem der vorhergehenden Ansprüche, wobei die Antriebseinrichtung (6) als ein Stellantrieb in Form eines Zahnradgetriebes ausgebildet ist.

8. Schlosssystem (5) nach einem der Ansprüche 1 bis 6, wobei die Antriebseinrichtung (6) als ein Stellantrieb in Form einer Exzenterscheibe (16) ausgebildet ist, die bei Bewegung aus der Grundposition in die erste Betriebsposition einen mit der Handhabe (3) in Wirkverbindung stehenden Hebel (17) auslenkt, dessen Auslenkung eine Bewegung der Handhabe (3) in die Öffnungsstellung bewirkt.

9. Schlosssystem (5) nach einem der Ansprüche 1 bis 6, wobei die Antriebseinrichtung (6) als ein Stellantrieb in Form einer mit einem Zahnrad zusammenwirkenden Zahnstange ausgebildet ist.

10. Schlosssystem (6) nach einem der vorhergehenden Ansprüche, wobei die Antriebseinrichtung (6) einen motorischen Antrieb umfasst.

## Claims

1. Lock system (5) for a motor vehicle (1) comprising a handle (3) for opening a door (2a) or a hatch (2b) of the motor vehicle (1), an actuating device (6) connected to the handle (3), a control device (8), connected to the actuating device (6), which is suitable for checking an access code of a mobile ID transmitter, and a lock device (12) for the door (2a) or hatch (2b),
wherein the handle (3) is designed to be movable between a non-operational position in which it is flush with the outer contour (4) of the door (2a) of hatch (2b), and an opening position in which it protrudes, at least in parts, from the outer contour (4),
wherein for opening or closing the door (2a) or hatch (2b) the actuating device (6) is connected and designed in such a way that during opening or closing it moves along a movement path (15), along which the actuating device (6) and the handle (3) move outwards in their opening position and move inwards in their non-operational position, and also operates the lock device (12)
**characterised in that**
when moving along the movement path (15) the actuating device (6) moves from a basic position via a first operating position into a second operating position, and wherein the actuating device (6) between the basic position and the first operating position is designed to move the handle (3) from the non-operational position into the opening position or from the opening position into the non-operational position and between the first operating position and the second operating position to operate the lock device (12),
wherein the handle (3) and the actuating device (6) are connected in such a way that operating the handle (3) in the opening position activates the actuating device (6) in such a way that actuating device (6) moves from the first operating position into the second operating position and that during its movement into the second operating position the actuating device (6) triggers the lock device (12).

2. Lock system (5) according to claim 1 wherein the actuating device (6) moves along the movement path (15) from a basic position via a first operating position into a second operating position, and wherein in the basic position the handle (3) is arranged in the non-operational position, in the first operating position the actuating device (6) holds the handle (3) in the opening position and in the second operating position the actuating device (6) holds the handle (3) in the opening position and operates the lock device (12) .

3. Lock system (5) according to any one of the preceding claims wherein a sensor device is provided which is designed to activate a mobile ID transmitter, wherein the activation of the ID transmitter causes an access code to be sent from the ID transmitter to the control device (8) and the control device (8) and the actuating device (6) are connected in such a way that on determining a legitimised ID transmitter the control device (8) brings about the movement of the actuating device (6) from the basic position into the first operating position.

4. Lock system (5) according to claim 3 wherein the sensor device is in the form of a capacitive sensor.

5. Lock system (5) according to claim 1 **characterised in that** a receiving device (10) is provided which is connected to the control device (8) and which receives an access code sent by a mobile ID transmitter and forwards it to the control devices (8) for legitimisation checking, wherein the control device (8) and the actuating device (6) are connected to each other in such a way that on determining a legitimised ID transmitter the control device (8) causes the actuating device (6) to move out of the basic position into the first operating position.

6. Lock system (5) according to claims 3 to 5 wherein the sensor device (10) or the receiving device is accommodated and arranged in the handle (3).

7. Lock system (5) according to any one of the preceding claims wherein the actuating device (6) is designed as an actuator in the form of a gear drive.

8. Lock system (5) according to any one of claims 1 to 6 wherein the actuating device (6) is designed as an actuator in the form on an eccentric disc (16) which when moving from the basic position into the first operating position deflects a lever (17) which is in operative connection with the handle (3), the deflection causing a movement of the handle (3) into the opening position.

9. Lock system (5) according to any one of claims 1 to 6 wherein the actuating device (6) is designed as an actuator in the form of a rack interacting with a gearwheel.

10. Lock system (6) according to any one of the preceding claims wherein the actuating device (6) comprises a motor drive.

## Revendications

1. Système de serrure (5) pour véhicule automobile (1) qui présente une poignée (3) pour ouvrir une porte (2a) ou un abattant (2b) du véhicule automobile (1), un dispositif d'entraînement (6) couplé à la poignée (3), un dispositif de commande (8) couplé au dispositif d'entraînement (6) qui est approprié pour vérifier un code d'accès d'un indicateur d'identité mobile, et un dispositif de serrure (12) pour la porte (2a) ou l'abattant (2b),
dans lequel la poignée (3) est conçue mobile entre une position de non-utilisation dans laquelle elle affleure avec le contour extérieur (4) de la porte (2a) ou de l'abattant (2b), et une position d'ouverture dans laquelle elle dépasse du contour extérieur (4) au moins par tronçons,
dans lequel le dispositif d'entraînement (6) est ainsi couplé et conçu pour ouvrir ou fermer la porte (2a) ou l'abattant (2b) que lors de l'ouverture ou de la fermeture, il se déplace le long d'une trajectoire (15) le long de laquelle le dispositif d'entraînement (6) sort la poignée (3) dans sa position d'ouverture ou la rentre dans sa position de non-utilisation et actionne également le dispositif de serrure (12),
**caractérisé en ce que**
le dispositif d'entraînement (6) se déplace d'une position de base en passant par une première position de service à une deuxième position de service lors du déplacement le long de la trajectoire (15) et dans lequel le dispositif d'entraînement (6), entre la position de base et la première position de service, est conçu pour déplacer la poignée (3) de la position de non-utilisation à la position d'ouverture ou de la position d'ouverture à la position de non-utilisation et pour actionner le dispositif de serrure (12) entre la première position de service et la deuxième position de service,
dans lequel la poignée (3) et le dispositif d'entraînement (6) sont ainsi couplés qu'un actionnement de la poignée (3) dans la position d'ouverture active ainsi le dispositif d'entraînement (6), que le dispositif d'entraînement (6) se déplace de la première position de service à la deuxième position de service et que le dispositif d'entraînement (6) libère le dispositif de serrure (12) lors de son déplacement dans la deuxième position de service.

2. Système de serrure (5) selon la revendication 1, dans lequel le dispositif d'entraînement (6) se déplace le long de la trajectoire (15) d'une position de base en passant par une première position de service à une deuxième position de service, et dans lequel dans la position de base, la poignée (3) est disposée dans la position de non-utilisation, dans la première position de service, le dispositif d'entraînement (6) maintient la poignée (3) dans la position d'ouverture, et dans la deuxième position de service, le dispositif d'entraînement (6) maintient la poignée (3) dans la position d'ouverture et actionne aussi le dispositif de serrure (12).

3. Système de serrure (5) selon l'une des revendications précédentes, dans lequel un dispositif de capteur est prévu qui est conçu pour activer un indicateur d'identité mobile, dans lequel l'activation de l'indicateur d'identité a pour effet l'envoi d'un code d'accès de l'indicateur d'identité au dispositif de commande (8), et le dispositif de commande (8) et le dispositif d'entraînement (6) sont ainsi couplés que le dispositif de commande (8), lors de la détermination d'un indicateur d'identité légitimé, commande le dispositif d'entraînement (6) en vue de son déplacement de la position de base à la première position de service.

4. Système de serrure (5) selon la revendication 3, dans lequel le dispositif de capteur est conçu en tant que capteur capacitif.

5. Système de serrure (5) selon la revendication 1, **caractérisé en ce qu'**un dispositif de réception (10) couplé au dispositif de commande (8) est prévu qui reçoit un code d'accès envoyé par un indicateur d'identité mobile et le transmet au dispositif de commande (8) pour un examen de légitimation, dans lequel le dispositif de commande (8) et le dispositif d'entraînement (6) sont ainsi couplés que le dispositif de commande (8), lors de la détermination d'un indicateur d'identité légitimé, commande le dispositif d'entraînement (6) en vue de son déplacement de la position de base à la première position de service.

6. Système de serrure (5) selon l'une des revendications 3 à 5, dans lequel le dispositif de capteur (10) ou le dispositif de réception est logé et disposé dans la poignée (3).

7. Système de serrure (5) selon l'une des revendications précédentes, dans lequel le dispositif d'entraînement (6) est conçu en tant qu'un actionneur sous forme d'un engrenage.

8. Système de serrure (5) selon l'une des revendications 1 à 6, dans lequel le dispositif d'entraînement (6) est conçu en tant qu'un actionneur sous forme d'un disque d'excentrique (16) qui lors du déplacement de la position de base à la première position de service, dévie un levier (17) en coopération avec la poignée (3), dont la déviation a pour effet un déplacement de la poignée (3) dans la position d'ouverture.

9. Système de serrure (5) selon l'une des revendications 1 à 6, dans lequel le dispositif d'entraînement (6) est conçu en tant qu'un actionneur sous forme d'une crémaillère coopérant avec une roue dentée.

10. Système de serrure (6) selon l'une des revendications précédentes, dans lequel le dispositif d'entraînement (6) comprend un entraînement à moteur.
